# EUROPÄISCHE PATENTSCHRIFT

(11) **EP 4 260 694 B1**
(45) Veröffentlichungstag und Bekanntmachung des Hinweises auf die Patenterteilung: **24.04.2024**
(21) Anmeldenummer: 23167247.8
(22) Anmeldetag: 11.04.2023
(51) Int. Cl.: A01K 45/00, G01G 17/08

(54) **GEFLÜGELTIERWAAGE UND VERFAHREN ZUM GESCHLECHTSSPEZIFISCHEN WIEGEN VON GEFLÜGELTIEREN**
POULTRY BALANCE AND METHOD FOR SEX-SPECIFIC WEIGHING OF POULTRY ANIMALS
BALANCE POUR VOLAILLE ET PROCÉDÉ DE PESAGE SPÉCIFIQUE AU SEXE DE VOLAILLE

(30) Priorität: 14.04.2022 LU 102927
(43) Veröffentlichungstag der Anmeldung: 18.10.2023
(73) Patentinhaber: Big Dutchman International GmbH, 49377 Vechta (DE)
(72) Erfinder: Fuchs, Karsten Gerhard, 49632 Essen (Oldenburg) (DE)
(74) Vertreter: Eisenführ Speiser

(56) Entgegenhaltungen:
- EP-A1- 0 589 534
- EP-B1- 2 133 672

## Beschreibung

Die Erfindung betrifft eine Geflügeltierwaage zum geschlechtsspezifischen Wiegen in Geflügeltierhaltung, ein Verfahren zum geschlechtsspezifischen Wiegen von Geflügeltieren in Geflügeltierhaltung und die Verwendung einer Geflügeltierwaage.

EP 2133672B1 beschreibt eine mit Kraftsensoren und Auswertungseinheit ausgebildete Geflügelwaage um Gewichtskraftveränderung der auf der Aufstandsfläche befindlichen Geflügeltiere zu speichern ohne geschlechtsspezifische Beurteilung.

In der Geflügeltierhaltung ist eine Wiegung der Tiere wichtig für die geschlechtsspezifische Beurteilung und Steuerung von deren Wachstum, geschlechtlicher Entwicklung, Tierwohl und anderen für die Geflügeltierzucht- und -haltung relevanten Parametern. Die Verwiegung von Geflügeltieren im Stall ist jedoch ein personal-, arbeits- und zeitintensiver Aufwand.

Es ist daher eine Aufgabe der vorliegenden Erfindung, eine Geflügeltierwaage zum geschlechtsspezifischen Wiegen in Geflügeltierhaltung, ein Verfahren zum geschlechtsspezifischen Wiegen von Geflügeltieren in Geflügeltierhaltung und eine Verwendung einer Geflügeltierwaage bereitzustellen, welche die genannten Nachteile vermindern oder beseitigen. Insbesondere ist es eine Aufgabe der vorliegenden Erfindung, eine Geflügeltierwaage zum geschlechtsspezifischen Wiegen in Geflügeltierhaltung, ein Verfahren zum geschlechtsspezifischen Wiegen von Geflügeltieren in Geflügeltierhaltung und eine Verwendung einer Geflügeltierwaage bereitzustellen, welche eine vereinfachte und/oder kostensparende und/oder zuverlässige Lösung darstellen.

Diese Aufgabe wird erfindungsgemäß gelöst durch eine Geflügeltierwaage nach Anspruch 1.

Die Erfindung beruht unter anderem auf der Erkenntnis, dass in der Geflügeltierhaltung, insbesondere in der Geflügeltierhaltung, wie beispielsweise in der Bruteierproduktion, in der Hähne und Hennen gemeinsam gehalten werden, eine geschlechtsspezifische Verwiegung wichtig ist. Unter geschlechtsspezifischem Wiegen wird hier insbesondere verstanden, zusätzlich zum Gewicht das Geschlecht der Geflügeltiere zu bestimmen und vorzugsweise auch bei einer weiteren Auswertung zu berücksichtigen. Beispielsweise entwickelt sich in der Regel das Gewicht von Hähnen bezogen über das Tieralter schneller nach oben als das Gewicht von Hennen, d.h. Hähne sind gegenüber Hennen schwerer. Von Geflügeltierzuchtgesellschaften etwa werden Wiegekurven mit Standard-Soll-Gewichten bezogen auf das Gewicht für verschiedene Geflügeltiergenetiken zur Verfügung gestellt. Insbesondere im Zeitraum eines Alters der Geflügeltiere zwischen 16 und 62 Wochen ist die Anwendung der hier beschriebenen Lösung von Vorteil. Beispielsweise nehmen Geflügeltiere in diesem Zeitraum etwa 30 bis 70 g pro Woche zu. Vorzugsweise ist die Geflügeltierwaage ausgebildet, Gewichte im Bereich von 0,5 bis 15 kg zu erfassen, insbesondere Gewichte von mindestens 0,8 kg und/oder von maximal 10 kg.

Mit der hier vorgeschlagenen Lösung wird es möglich, das Gewicht eines Geflügeltieres zu erfassen und mit einer Geschlechtsinformation dieses Tieres zu verknüpfen. Dies hat den Vorteil, dass gegenüber existierenden Lösungen, bei denen eine Geschlechtsinformation manuell oder anderweitig separat ermittelt werden muss, hier mit der Geflügeltierwaage, die bedarfsweise in einen Geflügeltierstall verbracht werden kann, um eine Population zu verwiegen, die Gewichts- und die Geschlechtsinformation eines Geflügeltieres erfasst werden kann.

Die Gewichtserfassung führt zu Gewichtsinformationen über die Geflügeltiere, die Geschlechtserkennung führt zu Geschlechtsinformationen über die Geflügeltiere. Pro Geflügeltier wird dabei eine Gewichtsinformation und eine Geschlechtsinformation ermittelt. Innerhalb der Population an Geflügeltieren in einem Geflügeltierstall wird dann eine Vielzahl an Gewichtsinformationen und Geschlechtsinformationen ermittelt. Dies kann Gewichtsinformationen und Geschlechtsinformationen zu allen Geflügeltieren einer Population umfassen oder Gewichtsinformationen und Geschlechtsinformationen zu nur einem Teil der Geflügeltiere. Eine Gewichtsinformation, die mit einer Geschlechtsinformation verknüpft ist, kann auch als geschlechtsspezifische Gewichtsinformation bezeichnet werden. Damit kann eine Gewichtsinformation bezeichnet werden, die neben einer Gewichtsangabe auch eine Geschlechtsangabe erhält.

Da die hier vorgeschlagene Geflügeltierwaage vorzugsweise mobil ist, kann sie ein einen Geflügeltierstall, dessen Population verwogen werden soll, verbracht werden. Die Wiegeplatte ist vorzugsweise derart angeordnet, dass Geflügeltiere selbsttätig und eigeninitiativ, vorzugsweise ohne größere Hemmschwelle, auf die Wiegeplatte gelangen können. Die Geflügeltierwaage kann also im Geflügeltierstall an einer Stelle - oder an mehreren Stellen nacheinander oder gleichzeitig mit mehreren Geflügeltierwaagen - aufgestellt werden. Im Rahmen ihrer natürlichen Bewegungen in Stallbereich werden die Geflügeltiere auch die Wiegeplatte betreten und sobald ein Geflügeltier die Wiegeplatte betritt, ein Messvorgang ausgelöst, bei dem eine Gewichtsinformation und eine Geschlechtsinformation ermittelt wird.

Hierzu weist die Geflügeltierwaage nicht nur ein Wiegemodul auf, das ausgebildet ist, das Gewicht eines auf der Wiegeplatte befindlichen Geflügeltiers zu erfassen, und eine Geflügeltieridentifikationseinheit, die ausgebildet ist, ein Geschlecht eines auf der Wiegeplatte befindlichen Geflügeltiers zu erkennen. Durch die funktionale Anordnung dieser Elemente als Teil der Geflügeltierwaage wird eine vollständige Lösung geschaffen. Auf diese Weise kann der erforderliche Personaleinsatz deutlich reduziert werden, da die Geflügeltiere selbsttätig die Geflügeltierwaage betreten und die Geschlechtsinformation automatisch mit ermittelt wird, ohne dass hierfür ein manueller oder separater Vorgang erforderlich ist.

Ferner weist die Geflügeltierwaage eine Geflügeltieridentifikationseinheit aus, die ausgebildet ist, ein einzelnes oder mehrere auf der Wiegeplatte befindliche Geflügeltiere und deren Geschlecht zu erkennen, um die gewonnenen Gruppen Gewichte- und Geschlechtsinformationen zu erfassen und abhängig von einer gleich- oder gemischtgeschlechtlichen Gruppe zu verwerten.

Eine Ausbildung und Anordnung als funktionale Einheit kann beispielsweise Ausbildung und Anordnung innerhalb eines Gehäuses realisiert sein.

Um Gewichtsinformationen und Geschlechtsinformationen von einer möglichst großen Zahl an Geflügeltieren zu erfassen, ist es bevorzugt, die Geflügeltierwaage innerhalb eines Geflügeltierstalles so zu positionieren, dass sich die Geflügeltierwaage möglichst in einem von vielen Geflügeltieren hoch frequentierten Bereich befindet.

Durch die Ermittlung von Gewichtsinformationen und Geschlechtsinformationen wird es möglich, geschlechtsspezifische Gewichtsinformationen abzuleiten und beispielsweise mit geschlechtsspezifischen Wiegekurven oder anderen Sollwerten zu vergleichen. Je nach Vergleichsergebnis können dann Futtermenge und/oder Futterart angepasst werden, insbesondere ebenfalls geschlechtsspezifisch, da auch die Fütterung in Geflügeltierhaltung meist nach Geschlechtern getrennt erfolgt. Dies ist insbesondere vorteilhaft aufgrund gestiegener Futterpreise, da auf diese Weise eine möglichst bedarfsgerechte und tierwohlfördernde Fütterung vorgenommen werden kann.

Gemäß einer bevorzugten Ausführungsform ist vorgesehen, dass Geflügeltieridentifikationseinheit eine Bilderkennungseinheit umfasst. Es kann eine Bilderkennungseinheit vorgesehen sein, mit der das Geschlecht eines auf der Wiegeplatte befindlichen Geflügeltiers erkannt werden kann. Dies hat den Vorteil, dass keine Elemente wie RFID-Tags am Geflügeltier angebracht werden müssen. Nichtsdestotrotz ist es einem Fachmann geläufig anhand der entsprechenden RFID-Tags sowie RFID-Reader Geschlecht des Tiers zu erkennen. Die Art der spezifischen Erkennung des individuellen Geschlechts schränkt den Umfang der Erfindung nicht ein.

Vorzugsweise ist vorgesehen, dass die Bilderkennungseinheit eine Kamera und eine Bildauswerteeinheit umfasst.

Es ist ferner bevorzugt, dass die Kamera angeordnet ist, die Anzahl, eines oder mehrerer auf der Wiegeplatte befindlicher Geflügeltiere zu erkennen. Um Gewicht und Geschlecht eindeutig präzise zuzuordnen, ist es bevorzugt, bei mehreren Geflügeltieren auf der Wiegeplatte nur solche Wiegungen weiter zu verarbeiten, die gleichgeschlechtliche Gruppen erkannt haben. Gemischtgeschlechtliche Wiegungen werden vorzugsweise separat verwertet oder verworfen.

Es ist ferner bevorzugt, dass die Kamera angeordnet ist, ein auf der Wiegeplatte befindliches Geflügeltier, insbesondere den Bereich eines Kopfes eines auf der Wiegeplatte befindlichen Geflügeltiers, zu erfassen. Ferner ist bevorzugt, dass die Bildauswerteeinheit ausgebildet ist, anhand von Bilddaten, insbesondere Bilddaten vom Bereich eines Kopfes eines Geflügeltiers, das Geschlecht des Geflügeltiers zu bestimmen.

Diese Ausführungsform basiert auf der Erkenntnis, dass geschlechtsspezifische, insbesondere unterschiedliche phänotypische, Merkmale von Hahn und Henne am Kopf, wie beispielsweise anhand von Kehllappen, Schnabel und/oder Größe, gut über Bilderfassung und -auswertung erkennen lassen, insbesondere im Zeitraum eines Alters der Geflügeltiere zwischen 16 und 62 Wochen.

In einer bevorzugten Ausführungsform ist vorgesehen, dass das Wiegemodul ausgebildet ist, geschlechtsspezifische Mittelwerte einer Vielzahl von Gewichtsinformationen und/oder Geschlechtsinformationen zu bilden. Dabei werden vorzugsweise die Gewichtsinformationen, die eine gleiche oder übereinstimmende Geschlechtsinformation haben, zusammenaddiert und durch die Anzahl der den Gewichtsinformationen zugrundeliegenden Geflügeltieren geteilt werden.

Eine weitere bevorzugte Weiterbildung ist gekennzeichnet durch eine Speichereinheit, wobei vorzugsweise die Speichereinheit innerhalb der Geflügeltierwaage angeordnet ist, und/oder wobei vorzugsweise die Speichereinheit ausgebildet ist, Gewicht und/oder Geschlecht von Geflügeltieren und/oder geschlechtsspezifische Mittelwerte einer Vielzahl von Gewichtsinformationen und/oder Geschlechtsinformationen zu speichern.

Das Wiegemodul ist ausgebildet, ein Gewicht, insbesondere ein gewichtsspezifisches Gewicht, und/oder ein Geschlecht und/oder geschlechtsspezifischer Mittelwerte einer Vielzahl von Gewichtsinformationen mit mindestens einer Wiegekurve, vorzugsweise mindestens zwei geschlechtsspezifischen Wiegekurven zu vergleichen, wobei Gewichtsinformationen, insbesondere geschlechtsspezifische Gewichtsinformationen, die um einen vorzugsweise vorbestimmten Wert von einer Wiegekurve abweichen, separat gespeichert und/oder bei der Bildung von Mittelwerten nicht berücksichtigt werden. Solche abweichenden Messungen können beispielsweise Fehlmessungen sein, die etwa daraus resultieren können, dass sich mehrere Geflügeltiere auf der Wiegeplatte aufhalten.

In einer weiteren bevorzugten Weiterbildung ist vorgesehen, dass die mindestens eine Wiegekurve, vorzugsweise die mindestens zwei geschlechtsspezifischen Wiegekurven, in der Speichereinheit und/oder in dem Wiegemodul, hinterlegt ist bzw. sind, und/oder dadurch gekennzeichnet, dass eine Wiegekurve, vorzugsweise alle Wiegekurven, Daten zu Sollgewicht und/oder Sollgewichtsspanne bezogen auf das Geflügeltieralter beinhaltet bzw. beinhalten.

In dieser Ausführungsform wird also die weitere Verarbeitung der erfassten Gewichtsinformationen vorzugsweise davon abhängig gemacht, ob die geschlechtsspezifische Gewichtsinformation innerhalb einer, vorzugsweise vorbestimmten, Bandbreite um eine ebenfalls geschlechtsspezifische Wiegekurve liegt. Vorzugsweise werden geschlechtsspezifische Gewichtsinformationen, die innerhalb einer, vorzugsweise vorbestimmten, Bandbreite um eine ebenfalls geschlechtsspezifische Wiegekurve liegen, zur Bildung geschlechtsspezifischer Mittelwerte herangezogen. Auf diese Weise können vorzugsweise innerhalb einer Geflügeltierstallpopulation Mittelwerte von Gewichtsinformationen getrennt für Hähne und Hennen ermittelt werden. Dadurch, dass vorzugsweise diejenigen Gewichtsinformationen, die um einen, vorzugsweise vorbestimmten, Wert von den Gewichtskurven abweichen und/oder außerhalb einer, vorzugsweise vorbestimmten, Bandbreite um die Gewichtskurven liegen, separat gespeichert und/oder nicht für die Mittelwertbildung herangezogen werden, wird die Qualität und Aussagekraft der geschlechtsspezifischen Mittelwerte erhöht.

Vorzugsweise ist vorgesehen, dass in der Speichereinheit zu den Gewichtsinformationen und/oder Geschlechtsinformationen und/oder geschlechtsspezifischer Mittelwerte Ergänzungsdaten abgespeichert sind, wobei die Ergänzungsdaten vorzugsweise Zeitinformationen, beispielsweise in Form eines Zeitstempels, und/oder Ortsinformationen und/oder Umfeldinformationen.

Die Verarbeitung der Gewichtsinformationen und/oder Geschlechtsinformationen und/oder die Bildung von geschlechtsspezifischen Mittelwerten kann ganz oder teilweise in der Geflügeltierwaage, vorzugsweise in einer oder mehreren ihrer hier beschriebenen Komponenten, erfolgen, oder ganz oder teilweise in einer Recheneinheit, die Teil eines separaten Computers, Netzwerks und/oder Cloud sein kann. Eine Anbindung der Geflügeltierwaage an eine solche Recheneinheit kann vorzugsweise kabelgebunden oder kabellos ausgebildet sein.

Eine bevorzugte Weiterbildung zeichnet sich dadurch aus, dass die Geflügeltierwaage eine Datenschnittstelle aufweist, wobei die Datenschnittstelle vorzugweise ausgebildet ist, in der Speichereinheit gespeicherte Daten zu übertragen. Vorzugsweise kann die Datenübertragung kabelgebunden oder kabellos ausgebildet sein.

In einer bevorzugten Ausführungsform ist vorgesehen, dass die Wiegeplatte über mindestens oder genau eine Wiegezelle gelagert ist, wobei vorzugsweise die mindestens oder genau eine Wiegezelle innerhalb der Geflügeltierwaage angeordnet ist, und/oder wobei vorzugsweise die mindestens oder genau eine Wiegezelle Teil des Wiegemoduls ist.

Es ist ferner bevorzugt, dass die Geflügeltierwaage Edelstahl umfasst oder daraus besteht und/oder dadurch gekennzeichnet, dass die Geflügeltierwaage Edelstahl und Kunststoff umfasst oder daraus besteht. Ferner ist vorzugsweise vorgesehen, dass die Geflügeltierwaage spritzwassergeschützt und/oder wasserdicht ausgebildet ist.

Die Anordnung von verschiedenen Komponenten innerhalb der Geflügeltierwaage hat den Vorteil einer kompakten und mobilen Anordnung und gleichzeitig auch den Vorteil des Schutzes der Komponenten vor Umfeldeinflüssen, insbesondere vor den aggressiven Bedingungen in einem Geflügeltierstall, zu schützen. Die Ausgestaltung als spritzwassergeschützt und/oder wasserdicht hat den Vorteil, dass die Geflügeltierwaage gereinigt werden kann, z.B. mit einem Hochdruckreiniger. Dies ist insbesondere auch von Bedeutung, da die mobile Geflügeltierwaage in verschiedenen Ställen eingesetzt werden kann und beim Transfer von einem in den anderen Stall keine Übertragung von Verschmutzung und/oder Krankheitserregern erfolgen soll.

Bei einer solchen Ausbildung der Geflügeltierwaage und der Anordnung der Komponenten darin, ist insbesondere auch eine Ausgestaltung bevorzugt, bei der eine Zwischenspeicherung von Daten in der Geflügeltierwaage erfolgt, und die zwischengespeicherten Daten über einen Anschluss der Geflügeltierwaage über die Datenschnittstelle zu übertragen, vorzugsweise funkfrei zu übertragen, die bei einer geschlossenen, spritzwassergeschützten und/oder wasserdichten Ausgestaltung der Geflügeltierwaage bevorzugt ist.

Ferner ist vorzugsweise vorgesehen, dass die Geflügeltierwaage fahrbar ausgestaltet ist und vorzugsweise ein Fahrwerk, beispielsweise Rollen und/oder Ketten und/oder Kufen, aufweist, wobei vorzugsweise das Fahrwerk derart angeordnet ist, dass die Geflügeltierwaage gekippt und auf dem Fahrwerk bewegt werden kann. Dabei ist insbesondere bevorzugt, dass die Geflügeltierwaage eine Griffstange und/oder einen Haltegriff und/oder eine Auffindbarkeitshilfe aufweist.

Eine fahrbare und/oder tragbare Ausgestaltung, insbesondere mit Griffstange und/oder Haltegriff und/oder Auffindbarkeitshilfe, erleichtert die Verbringung der Geflügeltierwaage von einem Einsatzort zum anderen. Eine Ausgestaltung vorzugsweise in Form eines Trolleys hat den Vorteil, einer einfachen und unkomplizierten Bewegungsfähigkeit und Wiederauffindbarkeit, insbesondere auch in einem Geflügeltierstall. Eine Auffindbarkeitshilfe kann beispielsweise optisch und/oder akustisch und/oder signaltechnisch ausgebildet sein. Die Auffindbarkeitshilfe kann beispielsweise eine, vorzugsweise nach oben gerichtete, Stange, ggf. mit einem gut sichtbaren Markierungselement umfassen und/oder einen Licht- und/oder Tonsignalgeber umfassen. Auch die Griffstange und/oder der Haltegriff können als Auffindbarkeitshilfe dienen. Die Auffindbarkeitshilfe ist vorteilhaft, da in einem Geflügelstall mit Geflügel eine hineingestellte Geflügeltierwaage möglicherweise sehr schwer wieder aufgefunden werden kann, da diese von großen Geflügeltieren verdeckt sein kann. Hierbei kann die Auffindbarkeitshilfe er erleichtern, die Geflügeltierwaage zu lokalisieren.

Eine weitere bevorzugte Fortbildung zeichnet sich dadurch aus, dass die Geflügeltierwaage Lockmittel aufweist, z.B. Futter-, Wasser- oder Lichtmittel um die Attraktivität der Geflügeltierwaage, insbesondere die Wiegeplatte, für Geflügeltiere zu erhöhen. Da die Qualität und Aussagekraft der geschlechtsspezifischen Mittelwerte mit der Anzahl der gewogenen Geflügeltiere zunimmt, kann eine Attraktivitätssteigerung vorteilhaft sein, um möglichst viele Geflügeltiere zu wiegen.

Gemäß einem weiteren Aspekt der Erfindung wird die eingangs genannte Aufgabe gelöst durch ein Verfahren zum geschlechtsspezifischen Wiegen von Geflügeltieren in Geflügeltierhaltung nach Anspruch 13.

Das Verfahren umfasst ferner: Speichern von Gewichtsinformationen und/oder Geschlechtsinformationen, und/oder Bilden und vorzugsweise Speichern geschlechtsspezifischer Mittelwerte einer Vielzahl von Gewichtsinformationen und/oder Geschlechtsinformationen. Ferner vorzugsweise umfasst das Verfahren Versehen und vorzugsweise Speichern der Gewichtsinformationen und/oder Geschlechtsinformationen und/oder geschlechtsspezifischer Mittelwerte mit Ergänzungsdaten, vorzugsweise umfassend Zeitinformationen, beispielsweise in Form eines Zeitstempels, und/oder Ortsinformationen und/oder Umfeldinformationen. und/oder Übertragen von Gewichtsinformationen und/oder Geschlechtsinformationen und/oder geschlechtsspezifischer Mittelwerte und vorzugsweise von Ergänzungsdaten, und/oder Vergleichen von Gewichtsinformationen und/oder Geschlechtsinformationen und/oder geschlechtsspezifischer Mittelwerte mit mindestens zwei geschlechtsspezifischen Wiegekurven.

Gemäß einem weiteren Aspekt der Erfindung wird die eingangs genannte Aufgabe gelöst durch die Verwendung einer zuvor beschriebenen Geflügeltierwaage zum geschlechtsspezifischen Wiegen von Geflügeltieren in Geflügeltierhaltung, insbesondere in einem zuvor beschriebenen Verfahren.

Hinsichtlich der Vorteile, bevorzugten Ausführungsformen und Details der einzelnen Aspekte und ihrer bevorzugten Ausführungsformen wird ebenfalls auf die entsprechenden Vorteile, bevorzugten Ausführungsformen und Details verwiesen, die mit Bezug auf die jeweils anderen Aspekte beschrieben sind.

Weitere vorteilhafte Ausführungsvarianten der zuvor beschriebenen Geflügeltierwaage und/oder des zuvor beschriebenen Verfahrens ergeben sich aus der Kombination einzelner, mehrerer oder aller der hier beschriebenen bevorzugten Merkmale.

Bevorzugte Ausführungsbeispiele werden beispielhaft anhand der beiliegenden Figuren beschrieben. Es zeigen:
- Figur 1:: eine dreidimensionale Darstellung einer beispielhaften mobilen Geflügeltierwaage;
- Figur 2:: eine Frontansicht der fahrbaren Geflügeltierwaage gemäß Figur 1;
- Figur 3:: eine Seitenansicht der fahrbaren Geflügeltierwaage gemäß Figur 1;
- Figur 4:: eine Rückansicht der fahrbaren Geflügeltierwaage gemäß Figur 1; und
- Figur 5:: ein schematisches Ablaufdiagramm eines beispielhaften Verfahrens zum Wiegen von Geflügeltieren.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind

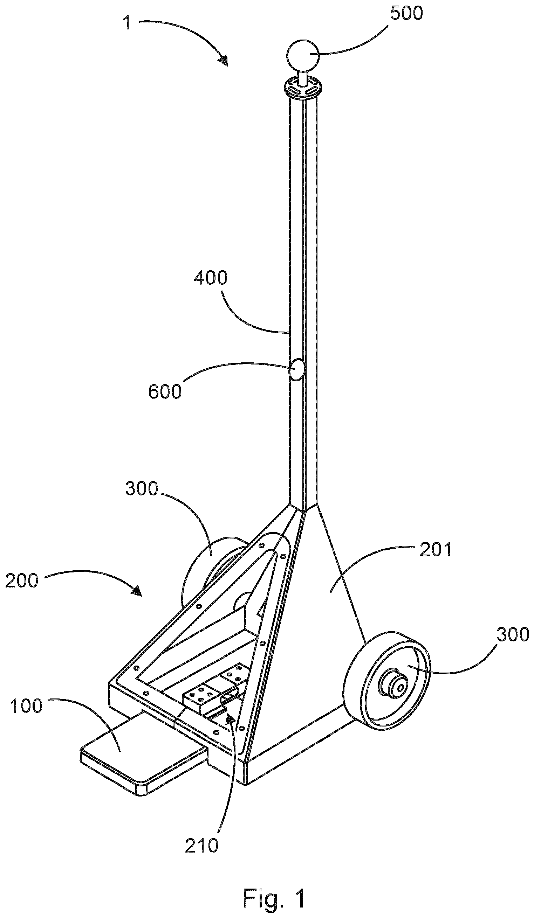

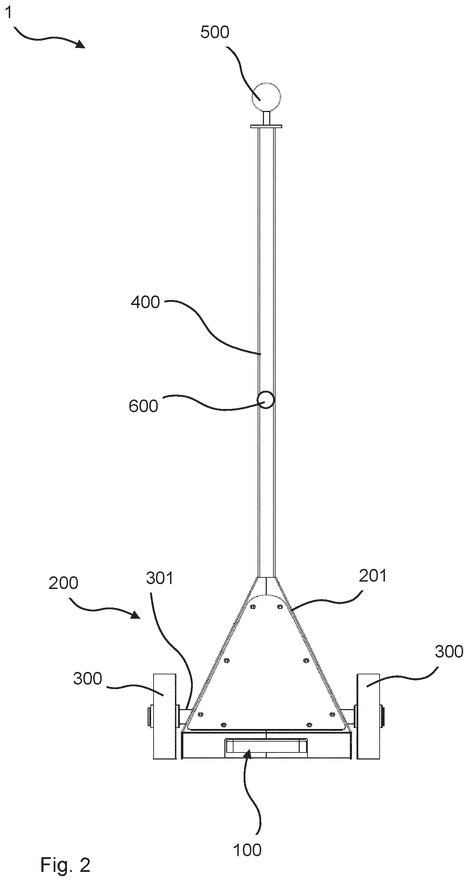

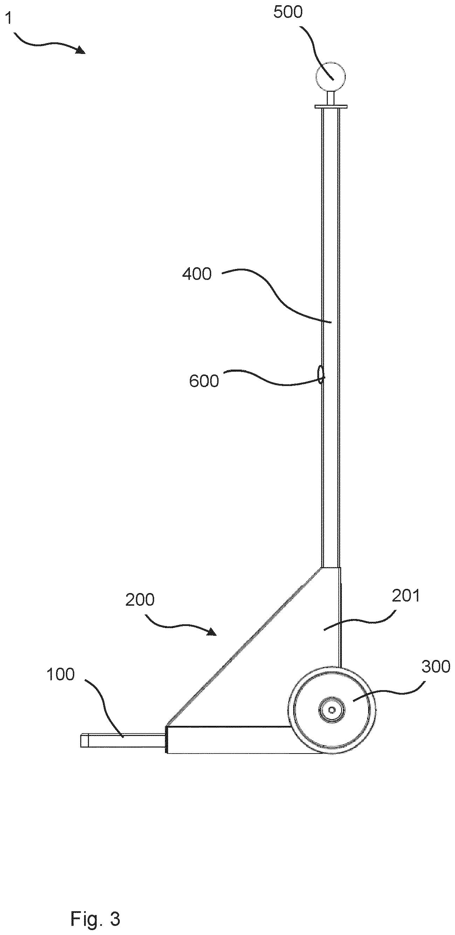

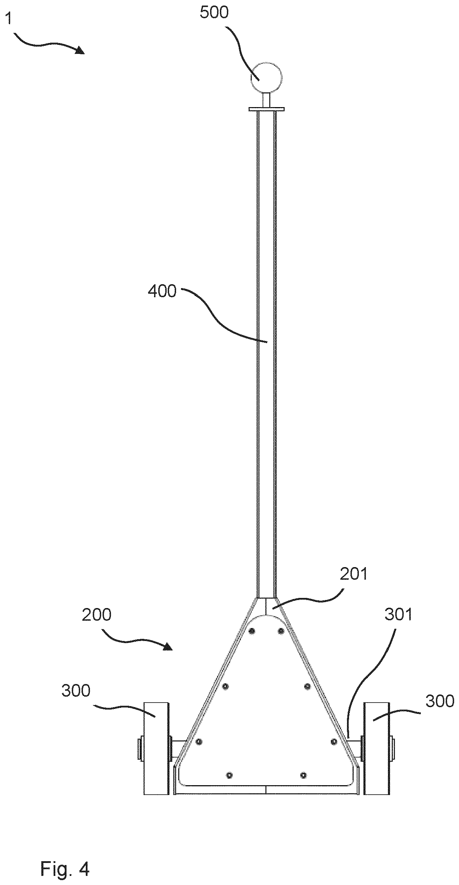

In den Figuren 1 bis 4 ist eine beispielhafte mobile Geflügeltierwaage 1 gezeigt. Die Geflügeltierwaage 1 dient zum geschlechtsspezifischen Wiegen in gemischtgeschlechtlicher Geflügeltierhaltung und ist mobil ausgebildet, damit die Geflügeltierwaage 1 in verschiedenen Geflügeltierställen und innerhalb eines Geflügeltierstalls an verschiedenen Stellen eingesetzt werden kann.

Insbesondere ist die Geflügeltierwaage 1 tragbar ausgestaltet. Als tragbar wird vorzugsweise eine Geflügeltierwaage 1 bezeichnet mit einem derartigen Gewicht und mit derartigen Abmessungen, dass die Geflügeltierwaage 1 von 1-2 Personen, insbesondere von einer Person allein, bewegt, insbesondere getragen, werden kann.

Im hier dargestellten Beispiel ist die Geflügeltierwaage 1 fahrbar ausgestaltet ist und weist ein Fahrwerk mit Rollen 300 auf, die über eine Rollenachse 301 gelagert sind. Das Fahrwerk ist derart angeordnet, dass die Geflügeltierwaage 100 gekippt und auf dem Fahrwerk bewegt werden kann, wie etwa ein Trolley. Damit kann die Geflügeltierwaage 1 am an der Griffstange 400 befestigten Haltegriff 500 gegriffen, gekippt und hinter einer Person herzogen werden, was eine besonders einfache Mobilität der Geflügeltierwaage 1 darstel lt.

Die Geflügeltierwaage 1 weist eine von Geflügeltieren selbsttätig betretbare Wiegeplatte 100 auf. Die Wiegeplatte 100 ist vorzugsweise das einzige Funktionselement, das, insbesondere auf Bodennähe, nicht im Gehäuse 200 angeordnet ist.

Die Geflügeltierwaage weist mehrere Seitenwände 201 auf, die vorzugsweise aus Edelstahl ausgebildet sind oder daraus bestehen oder aus Edelstahl und Kunststoff ausgebildet sind oder daraus bestehen. Insgesamt ist die Geflügeltierwaage derart ausgebildet, dass es Edelstahl umfasst oder daraus besteht und/oder Edelstahl und Kunststoff umfasst oder daraus besteht. Insbesondere ist die Geflügeltierwaage vorzugsweise spritzwassergeschützt und/oder wasserdicht ausgebildet.

Die Griffstange 400 und der Haltegriff 500 werden hier als in der Geflügeltierwaage angeordnete Funktionselemente verstanden, und umfassen vorzugsweise ebenfalls Edelstahl oder bestehen daraus und/oder umfassen Edelstahl und Kunststoff oder bestehen daraus. Ferner sind die Griffstange 400 und der Haltegriff 500 vorzugsweise ebenfalls spritzwassergeschützt und/oder wasserdicht ausgebildet. An der der Griffstange 400 und/oder dem Haltegriff 500 können ferner weitere Elemente, wie beispielsweise Vorrichtungen zur Aufnahme von Kameras o.ä. angeordnet sein.

Die Geflügeltierwaage umfasst in ihrem Inneren vorzugsweise alle Funktionselemente außer der Wiegeplatte 100. Diese in der Geflügeltierwaage angeordneten Funktionselemente können auch als Komponenten 210 bezeichnet werden. Die Komponenten 210 umfassen vorzugsweise ein Wiegemodul und eine Geflügeltieridentifikationseinheit. Das Wiegemodul ist ausgebildet, das Gewicht eines auf der Wiegeplatte 100 befindlichen Geflügeltiers zu erfassen. Die Geflügeltieridentifikationseinheit ist ausgebildet, ein Geschlecht eines auf der Wiegeplatte befindlichen Geflügeltiers zu erkennen. Die Geflügeltieridentifikationseinheit kann vorzugsweise eine Bilderkennungseinheit umfassen, die wiederum vorzugsweise eine Kamera und eine Bildauswerteeinheit aufweisen kann. Die Kamera kann vorzugsweise von der Bildauswerteeinheit beabstandet angeordnet sein und/oder ist vorzugsweise angeordnet, um auf der Wiegeplatte befindliche Geflügeltiere erfassen zu können, insbesondere deren Kopfbereich. Beispielsweise kann eine Kamera 600 an der Griffstange 400 und/oder dem Haltegriff 500 angeordnet sein.

Als Funktionselemente sind die Komponenten 210, insbesondere das Wiegemodul und die Geflügeltieridentifikationseinheit, innerhalb der Geflügeltierwaage angeordnet.

Die Wiegeplatte 100 ist vorzugsweise über mindestens oder genau eine Wiegezelle gelagert. Die mindestens oder genau eine Wiegezelle ist vorzugsweise innerhalb der Geflügeltierwaage angeordnet und kann vorzugsweise Teil des Wiegemoduls sein. Eine weitere Komponente 210 kann eine Speichereinheit sein.

Die Funktionsweise einer solchen Geflügeltierwaage 1 wird insbesondere auch an der folgenden Beschreibung eines beispielhaften Verfahrens 1000 zum Wiegen von Geflügeltieren in Geflügeltierhaltung deutlich.

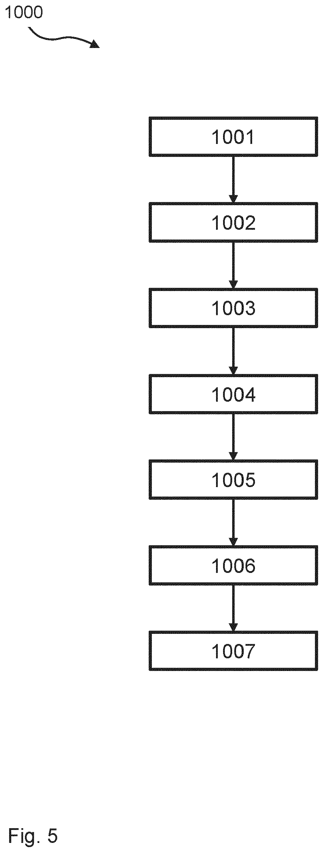

Figur 5 zeigt ein schematisches Ablaufdiagramm eines beispielhaften Verfahrens 1000 zum Wiegen von Geflügeltieren in Geflügeltierhaltung. Hierbei wird in einem ersten Schritt 1001 eine mobil Geflügeltierwaage, insbesondere eine zuvor beschriebene mobile Geflügeltierwaage, in einen Geflügeltierstall verbracht. Wenn sich auf der Wiegeplatte ein Geflügeltier befindet , wird in einem weiteren Schritt 1002 das Gewicht des Geflügeltiers erfasst und im Schritt 1003 das Geschlecht des Geflügeltiers erkannt. Diese Schritte 1002 und 1003 können vorzugsweise parallel und/oder gleichzeitig erfolgen. Das erfasste Gewicht und das erkannte Geschlecht werden im Schritt 1004 als Gewichtsinformation bzw. Geschlechtsinformation gespeichert. Die Schritte 1002 bis 1004 werden vorzugsweise wiederholt, sobald ein Geflügeltier die Wiegeplatte 100 verlassen hat und ein die Wiegeplatte erneut von einem Geflügeltier betreten wird.

Im Schritt 1005 werden die Gewichtsinformationen und/oder Geschlechtsinformationen vorzugsweise mit mindestens einer Wiegekurve, vorzugsweise mindestens zwei geschlechtsspezifischen Wiegekurven, verglichen. Hierbei können in vorteilhafter Weise drei Gruppen von Gewichtsinformationen gebildet werden: eine erste Gruppe von Gewichtsinformationen für ein erstes Geschlecht, eine zweite Gruppe von Gewichtsinformationen für ein zweites Geschlecht und eine dritte Gruppe von Gewichtsinformationen, die weder dem ersten noch dem zweiten Geschlecht zuzuordnen sind, beispielsweise weil sie über einen, vorzugsweise vorbestimmten, Wert oder Bereich hinaus von einer Wiegekurve und/oder einem Sollgewicht und/oder einer Sollgewichtsspanne abweichen.

Im Schritt 1006 werden geschlechtsspezifische Mittelwerte einer Vielzahl zuvor erfassten bzw. erkannten und vorzugsweise gespeicherten Gewichtsinformationen gebildet und vorzugsweise ebenfalls gespeichert. Hierbei wird vorzugsweise für die erste Gruppe von Gewichtsinformationen ein Mittelwert für das erste Geschlecht gebildet und für die zweite Gruppe von Gewichtsinformationen ein Mittelwert für das zweite Geschlecht gebildet. Die dritte Gruppe von Gewichtsinformationen kann einer separaten Auswertung zugeführt werden, in der beispielsweise nach Gründen oder Hinweisen für die abweichenden Werte gesucht werden kann.

Im Schritt 1007 werden zuvor vorzugsweise zwischengespeicherte Gewichtsinformationen und/oder Geschlechtsinformationen und/oder geschlechtsspezifischer Mittelwerte und vorzugsweise von Ergänzungsdaten, übertragen, vorzugsweise über eine Datenschnittstelle. Die Übertragung erfolgt vorzugsweise funkfrei, beispielsweise kabelgebunden und/oder über eine Dockingstation und/oder den Austausch einer Speichereinheit.

### Bezugszeichenliste

- 1: Geflügeltierwaage
- 100: Wiegeplatte
- 200: Gehäuse
- 201: Seitenwand
- 210: Komponenten
- 300: Rollen
- 301: Rollenachse
- 400: Griffstange
- 500: Handgriff
- 600: Kamera
- 1000: Verfahren zum Wiegen von Geflügeltieren
- 1001: Verbringen einer mobilen Geflügeltierwaage in einen Geflügeltierstall
- 1002: Erfassen des Gewichts eines Geflügeltiers
- 1003: Erkennen des Geschlechts eines auf der Wiegeplatte befindlichen Geflügeltiers
- 1004: Speichern von Gewichtsinformationen und/oder Geschlechtsinformationen
- 1005: Vergleichen von Gewichtsinformationen und/oder Geschlechtsinformationen mit mindestens einer Wiegekurve, vorzugsweise mindestens zwei geschlechtsspezifischen Wiegekurven
- 1006: Bilden und vorzugsweise Speichern geschlechtsspezifischer Mittelwerte einer Vielzahl von Gewichtsinformationen und/oder Geschlechtsinformationen
- 1007: Übertragen von Gewichtsinformationen und/oder Geschlechtsinformationen und/oder geschlechtsspezifischer Mittelwerte und vorzugsweise von Ergänzungsdaten

## Patentansprüche

1. Geflügeltierwaage (1) zum geschlechtsspezifischen Wiegen in Geflügeltierhaltung,
umfassend
- eine von Geflügeltieren selbsttätig betretbare Wiegeplatte (100),
- ein Wiegemodul, das ausgebildet ist, das Gewicht eines oder mehrerer auf der Wiegeplatte (100) befindlicher Geflügeltiere zu erfassen, und
- eine Geflügeltieridentifikationseinheit, die ausgebildet ist, ein einzelnes oder mehrere Geflügeltiere und das Geschlecht der auf der Wiegeplatte (100) befindlichen Geflügeltiere zu erkennen,
- wobei das Wiegemodul und die Geflügeltieridentifikationseinheit als funktionale Einheit der Geflügeltierwaage (1) ausgebildet und angeordnet sind,
- **dadurch gekennzeichnet, dass** das Wiegemodul ausgebildet ist, ein Gewicht, vorzugsweise samt ein Geschlecht, und/oder geschlechtsspezifischer Mittelwerte einer Vielzahl von Gewichtsinformationen mit mindestens einer Wiegekurve zu vergleichen, wobei Gewichtsinformationen, insbesondere geschlechtsspezifische Gewichtsinformationen, die um einen vorbestimmten Wert von einer Wiegekurve abweichen, separat gespeichert und/oder bei der Bildung von Mittelwerten nicht berücksichtigt werden.

2. Geflügeltierwaage (1) nach dem vorhergehenden Anspruch,
**dadurch gekennzeichnet, dass** die Geflügeltieridentifikationseinheit eine Bilderkennungseinheit umfasst.

3. Geflügeltierwaage (1) nach dem vorhergehenden Anspruch,
**dadurch gekennzeichnet, dass** die Bilderkennungseinheit eine Kamera (600) und eine Bildauswerteeinheit umfasst, wobei die Kamera (600) vorzugsweise angeordnet ist, ein auf der Wiegeplatte (100) befindliches Geflügeltier, insbesondere den Bereich eines Kopfes eines auf der Wiegeplatte (100) befindlichen Geflügeltiers, zu erfassen und/oder wobei die Bildauswerteeinheit vorzugsweise ausgebildet ist, anhand von Bilddaten, insbesondere Bilddaten vom Bereich eines Kopfes eines Geflügeltiers, das Geschlecht des Geflügeltiers zu bestimmen.

4. Geflügeltierwaage (1) nach mindestens einem der vorhergehenden
Ansprüche,
**dadurch gekennzeichnet, dass** das Wiegemodul ausgebildet ist, geschlechtsspezifische Mittelwerte einer Vielzahl von Gewichtsinformationen und/oder Geschlechtsinformationen zu bilden.

5. Geflügeltierwaage (1) nach mindestens einem der vorhergehenden
Ansprüche,
**dadurch gekennzeichnet, dass** das Wiegemodul ausgebildet ist, ein Gewicht und/oder ein Geschlecht und/oder geschlechtsspezifischer Mittelwerte einer Vielzahl von Gewichtsinformationen mit mindestens zwei geschlechtsspezifischen Wiegekurven zu vergleichen.

6. Geflügeltierwaage (1) nach mindestens einem der vorhergehenden
Ansprüche,
**dadurch gekennzeichnet, dass** die Wiegeplatte (100) über mindestens oder genau eine Wiegezelle gelagert ist, wobei vorzugsweise die mindestens oder genau eine Wiegezelle innerhalb der Geflügeltierwaage (1) angeordnet ist, und/oder wobei vorzugsweise die mindestens oder genau eine Wiegezelle Teil des Wiegemoduls ist.

7. Geflügeltierwaage (1) nach mindestens einem der vorhergehenden
Ansprüche,
**dadurch gekennzeichnet, dass** die Geflügeltierwaage (1) Teile aus Edelstahl umfasst oder daraus besteht und/oder **dadurch gekennzeichnet, dass** die Geflügeltierwaage (1) Teile Edelstahl und Kunststoff umfasst oder teils daraus besteht, und/oder
**dadurch gekennzeichnet, dass** die Geflügeltierwaage (1) spritzwassergeschützt und/oder wasserdicht ausgebildet ist.

8. Geflügeltierwaage (1) nach mindestens einem der vorhergehenden
Ansprüche,
**dadurch gekennzeichnet, dass** die Geflügeltierwaage (1) fahrbar ausgestaltet ist und vorzugsweise ein Fahrwerk, beispielsweise Rollen (300) und/oder Ketten und/oder Kufen, aufweist, wobei vorzugsweise das Fahrwerk derart angeordnet ist, dass die Geflügeltierwaage (1) gekippt und auf dem Fahrwerk bewegt werden kann, und/oder
**dadurch gekennzeichnet, dass** die Geflügeltierwaage (1) eine Griffstange (400) und/oder einen Haltegriff (500) und/oder eine Auffindbarkeitshilfe aufweist.

9. Geflügeltierwaage (1) nach mindestens einem der vorhergehenden
Ansprüche,
**gekennzeichnet durch** eine Speichereinheit, wobei vorzugsweise die Speichereinheit innerhalb die Geflügeltierwaage (1) angeordnet ist, und/oder wobei vorzugsweise die Speichereinheit ausgebildet ist, Gewicht und/oder Geschlecht von Geflügeltieren und/oder geschlechtsspezifische Mittelwerte einer Vielzahl von Gewichtsinformationen und/oder Geschlechtsinformationen zu speichern.

10. Geflügeltierwaage (1) nach mindestens einem der vorhergehenden
Ansprüche 5 und 9,
**dadurch gekennzeichnet, dass** die mindestens eine Wiegekurve, vorzugsweise die mindestens zwei geschlechtsspezifische Wiegekurven, in der Speichereinheit und/oder in dem Wiegemodul, hinterlegt ist bzw. sind, und/oder **dadurch gekennzeichnet, dass** eine Wiegekurve, vorzugsweise alle Wiegekurven, Daten zu Sollgewicht und/oder Sollgewichtsspanne bezogen auf das Geflügeltieralter beinhaltet bzw. beinhalten.

11. Geflügeltierwaage (1) nach mindestens einem der beiden vorhergehenden Ansprüche,
**dadurch gekennzeichnet, dass** die Geflügeltierwaage (1) eine Datenschnittstelle aufweist, wobei die Datenschnittstelle vorzugweise ausgebildet ist, in der Speichereinheit gespeicherte Daten zu übertragen.

12. Geflügeltierwaage (1) nach mindestens einem der vorhergehenden Ansprüche,
**dadurch gekennzeichnet, dass** die Geflügeltierwaage (1) Lockmittel aufweist, um die Attraktivität der Geflügeltierwaage, insbesondere die Wiegeplatte, für Geflügeltiere zu erhöhen.

13. Verfahren (1000) zum geschlechtsspezifischen Wiegen von Geflügeltieren in Geflügeltierhaltung,
umfassend:
- Verbringen (1001) einer mobilen Geflügeltierwaage (1), insbesondere einer Geflügeltierwaage nach mindestens einem der vorhergehenden Ansprüche, in einen Geflügeltierstall,
- Erfassen (1002) des Gewichts eines Geflügeltiers,
- Erkennen (1003) des Geschlechts eines auf der Wiegeplatte (100) befindlichen Geflügeltiers,
- Speichern von Gewichtsinformationen und/oder Geschlechtsinformationen, und/oder Bilden und vorzugsweise Speichern (1006) geschlechtsspezifischer Mittelwerte einer Vielzahl von Gewichtsinformationen und/oder Geschlechtsinformationen,
- Vergleichen (1004) von Gewichtsinformationen, vorzugsweise samt Geschlechtsinformationen, und/oder geschlechtsspezifischer Mittelwerte
mit mindestens einer Wiegekurve, wobei Gewichtsinformationen, insbesondere geschlechtsspezifische Gewichtsinformationen, die um einen vorbestimmten Wert von einer Wiegekurve abweichen, separat gespeichert und/oder bei der Bildung von Mittelwerten nicht berücksichtigt werden.

14. Verfahren nach dem vorhergehenden Anspruch,
**gekennzeichnet durch**:
- Versehen und vorzugsweise Speichern der Gewichtsinformationen und/oder Geschlechtsinformationen und/oder geschlechtsspezifischer Mittelwerte mit Ergänzungsdaten, vorzugsweise umfassend Zeitinformationen und/oder Ortsinformationen und/oder Umfeldinformationen,
- Übertragen (1007) von Gewichtsinformationen und/oder Geschlechtsinformationen und/oder geschlechtsspezifischer Mittelwerte und vorzugsweise von Ergänzungsdaten, und/oder
- Vergleichen von Gewichtsinformationen und/oder Geschlechtsinformationen und/oder geschlechtsspezifischer Mittelwerte mit mindestens zwei geschlechtsspezifischen Wiegekurven.

15. Verwendung einer Geflügeltierwaage (1) nach mindestens einem der vorhergehenden Ansprüche 1-12 zum geschlechtsspezifischen Wiegen von Geflügeltieren in Geflügeltierhaltung, insbesondere in einem Verfahren (1000) nach dem vorhergehenden Anspruch.

## Claims

1. Poultry weighing scale (1) for the gender-specific weighing in poultry farming, comprising
- a weighing plate (100) which is independently accessible by poultry,
- a weighing module, which is configured to detect the weight of one or more birds which are present on the weighing plate (100), and
- a poultry identification unit, which is configured to identify an individual or more birds, and the gender of the birds which are present on the weighing plate (100),
- wherein the weighing module and the poultry identification unit are configured and arranged as a functional unit of the poultry weighing scale (1),
- **characterized in that** the weighing module is configured to compare a weight preferably including the gender and/or gender-specific mean values for a plurality of weight information with at least one weight curve, preferably at least two gender-specific weight curves, wherein weight information, particularly gender-specific weight information, which deviates from a weight curve by a predefined value, is stored separately and/or is not considered for the forming of mean values.

2. Poultry weighing scale (1) according to the preceding claim, **characterized in that** the poultry identification unit comprises an image detection unit.

3. Poultry weighing scale (1) according to the preceding claim, **characterized in that** the image detection unit comprises a camera (600) and an image evaluation unit, wherein the camera (600) is preferably arranged to detect a bird which is present on the weighing plate (100), particularly the head region of a bird which is present on the weighing plate (100) and/or wherein the image evaluation unit is preferably configured, by reference to image data, particularly image data of the head region of a bird, to determine the gender of the bird.

4. Poultry weighing scale (1) according to at least one of the preceding claims, **characterized in that** the weighing module is configured to form gender-specific mean values of a plurality of weight information and/or gender information.

5. Poultry weighing scale (1) according to at least one of the preceding claims, **characterized in that** the weighing module is configured to compare a weight and/or a gender and/or gender-specific mean values for a plurality of weight information with at least two gender-specific weight curves.

6. Poultry weighing scale (1) according to at least one of the preceding claims, **characterized in that** the weighing plate (100) is mounted above at least or exactly one weighing cell, wherein the at least or exactly one weighing cell is preferably arranged within the poultry weighing scale (1), and/or wherein the at least or exactly one weighing cell is preferably part of the weighing module.

7. Poultry weighing scale (1) according to at least one of the preceding claims, **characterized in that** the poultry weighing scale (1) comprises parts of stainless steel, or is composed of the latter, and/or **characterized in that** the poultry weighing scale (1) comprises parts of stainless steel and plastic, or is partially composed of the latter, and/or
**characterized in that** the poultry weighing scale (1) is configured with a splashproof and/or watertight design.

8. Poultry weighing scale (1) according to at least one of the preceding claims, **characterized in that** the poultry weighing scale (1) is configured with a mobile design, and preferably comprises an undercarriage, for example rollers (300) and/or chains and/or runners, wherein the undercarriage is preferably arranged such that the poultry weighing scale (1) can be tilted and moved on the undercarriage, and/or
**characterized in that** the poultry weighing scale (1) comprises a handlebar (400) and/or a handle (500) and/or a location aid.

9. Poultry weighing scale (1) according to at least one of the preceding claims, **characterized by** a memory unit, wherein the memory unit is preferably arranged within the poultry weighing scale (1), and/or wherein the memory unit is preferably configured to save weight and/or gender of poultry and/or gender-specific mean values for a plurality of weight information and/or gender information.

10. Poultry weighing scale (1) according to at least one of claims 5 and 9, **characterized in that** the at least one weight curve, preferably the at least two gender-specific weight curves, is/are stored in the memory unit and/or in the weighing module, and/or **characterized in that** a weight curve, preferably all weight curves, contains/contain data on target weight and/or target weight range in relation to the age of poultry.

11. Poultry weighing scale (1) according to at least one of the two preceding claims, **characterized in that** the poultry weighing scale (1) comprises a data interface, wherein the data interface is preferably configured to transmit data which are stored in the memory unit.

12. Poultry weighing scale (1) according to at least one of the preceding claims, **characterized in that** the poultry weighing scale (1) comprises enticements, in order to enhance the attractiveness of the poultry weighing scale, particularly the weighing plate, to poultry.

13. Method (1000) for the gender-specific weighing of poultry in poultry farming, comprising:
- deployment (1001) of a portable poultry weighing scale (1), particularly a poultry weighing scale according to at least one of the preceding claims, in a poultry stall,
- detection (1002) of the weight of a bird,
- detection (1003) of the gender of a bird which is present on the weighing plate (100),
- saving of weight information and/or gender information, and/or formation and preferably saving (1006) of gender-specific mean values for a plurality of weight information and/or gender information,
- comparison (1004) of weight information preferably including gender information and/or gender-specific mean values with at least one weight curve, wherein weight information, particularly gender-specific weight information, which deviates from a weight curve by a predefined value, is stored separately and/or is not considered for the forming of mean values.

14. Method according to the preceding claim,
**characterized by**:
- providing and preferably saving of the weight information and/or gender information and/or gender-specific mean values with supplementary data, preferably comprising time information and/or geographical information and/or environmental information,
- transmission (1007) of weight information and/or gender information and/or gender-specific mean values, and preferably of supplementary data, and/or
- comparison of weight information and/or gender information and/or gender-specific mean values with at least two gender-specific weight curves.

15. Employment of a poultry weighing scale (1) according to at least one of the preceding claims 1-12 for the gender-specific weighing of poultry in poultry farming, particularly in a method (1000) according to the preceding claim.

## Revendications

1. Balance pour volaille (1) pour la pesée spécifique au sexe dans un élevage de volailles,
comprenant
- un plateau de pesée (100) sur lequel peuvent marcher automatiquement des volailles,
- un module de pesée, qui est réalisé pour détecter le poids d'une ou de plusieurs volailles se trouvant sur le plateau de pesée (100), et
- une unité d'identification de volaille, qui est réalisée pour reconnaître une seule ou plusieurs volailles et le sexe des volailles se trouvant sur le plateau de pesée (100),
- dans laquelle le module de pesée et l'unité d'identification de volaille sont réalisés et disposés en tant qu'unité fonctionnelle de la balance pour volaille (1),
- **caractérisée en ce que** le module de pesée est réalisé pour comparer un poids, de préférence y compris un sexe et/ou des moyennes spécifiques au sexe d'une pluralité d'informations de poids à au moins une courbe de pesée, dans laquelle des informations de poids, en particulier des informations de poids spécifiques au sexe, qui diffèrent d'une valeur prédéfinie d'une courbe de pesée, sont mises en mémoire séparément et/ou ne sont pas prises en compte pour la formation de moyennes.

2. Balance pour volaille (1) selon la revendication précédente,
**caractérisée en ce que** l'unité d'identification de volaille comprend une unité de reconnaissance d'image.

3. Balance pour volaille (1) selon la revendication précédente,
**caractérisée en ce que** l'unité de reconnaissance d'image comprend une caméra (600) et une unité d'évaluation d'image, dans laquelle la caméra (600) est disposée de préférence pour détecter une volaille se trouvant sur le plateau de pesée (100), en particulier la zone d'une tête d'une volaille se trouvant sur le plateau de pesée (100), et/ou dans laquelle l'unité d'évaluation d'image est réalisée de préférence pour déterminer le sexe de la volaille au moyen de données d'image, en particulier de données d'image de la zone d'une tête d'une volaille.

4. Balance pour volaille (1) selon au moins l'une des revendications précédentes,
**caractérisée en ce que** le module de pesée est réalisé pour former des moyennes spécifiques au sexe d'une pluralité d'informations de poids et/ou d'informations de sexe.

5. Balance pour volaille (1) selon au moins l'une des revendications précédentes,
**caractérisée en ce que** le module de pesée est réalisé pour comparer un poids et/ou un sexe et/ou des moyennes spécifiques au sexe d'une pluralité d'informations de poids à au moins deux courbes de pesée spécifiques au sexe.

6. Balance pour volaille (1) selon au moins l'une des revendications précédentes,
**caractérisée en ce que** le plateau de pesée (100) est monté au-dessus d'au moins ou d'exactement une cellule de pesée, dans laquelle de préférence l'au moins ou exactement une cellule de pesée est disposée à l'intérieur de la balance pour volaille (1), et/ou dans laquelle de préférence l'au moins ou exactement une cellule de pesée fait partie du module de pesée.

7. Balance pour volaille (1) selon au moins l'une des revendications précédentes,
**caractérisée en ce que** la balance pour volaille (1) comprend des pièces en acier inoxydable ou en est constituée et/ou **caractérisée en ce que** la balance pour volaille (1) comprend des pièces en acier inoxydable et matière plastique ou en est en partie constituée, et/ou
**caractérisée en ce que** la balance pour volaille (1) est réalisée de manière protégée contre les projections d'eau et/ou de manière étanche à l'eau.

8. Balance pour volaille (1) selon au moins l'une des revendications précédentes,
**caractérisée en ce que** la balance pour volaille (1) est conçue de manière mobile et de préférence présente un châssis, par exemple des roulettes (300) et/ou chaînes et/ou patins, dans laquelle de préférence le châssis est disposé de telle sorte que la balance pour volaille (1) peut être basculée et déplacée sur le châssis, et/ou
**caractérisée en ce que** la balance pour volaille (1) présente une barre de préhension (400) et/ou une poignée de maintien (500) et/ou une aide à la recherche.

9. Balance pour volaille (1) selon au moins l'une des revendications précédentes,
**caractérisée par** une unité de mémoire, dans laquelle de préférence l'unité de mémoire est disposée à l'intérieur de la balance pour volaille (1), et/ou dans laquelle de préférence l'unité de mémoire est réalisée pour mettre en mémoire le poids et/ou sexe de volailles et/ou des moyennes spécifiques au sexe d'une pluralité d'informations de poids et/ou d'informations de sexe.

10. Balance pour volaille (1) selon au moins l'une des revendications précédentes 5 et 9,
**caractérisée en ce que** l'au moins une courbe de pesée, de préférence les au moins deux courbes de pesée spécifiques au sexe, est ou sont enregistrée(s) dans l'unité de mémoire et/ou dans le module de pesée, et/ou **caractérisée en ce qu'**une courbe de pesée, de préférence toutes les courbes de pesée, comporte ou comportent des données relatives au poids de consigne et/ou à l'étendue de poids de consigne par rapport à l'âge de la volaille.

11. Balance pour volaille (1) selon au moins l'une des revendications précédentes,
**caractérisée en ce que** la balance pour volaille (1) présente une interface de données, dans laquelle l'interface de données est réalisée de préférence pour transmettre des données mises en mémoire dans l'unité de mémoire.

12. Balance pour volaille (1) selon au moins l'une des revendications précédentes,
**caractérisée en ce que** la balance pour volaille (1) présente des attractifs, afin d'augmenter l'attractivité de la balance pour volaille, en particulier le plateau de pesée, pour des volailles.

13. Procédé (1000) pour la pesée spécifique au sexe de volailles dans un élevage de volailles,
comprenant :
- l'amenée (1001) d'une balance pour volaille (1) mobile, en particulier d'une balance pour volaille selon au moins l'une des revendications précédentes, dans un poulailler,
- la détection (1002) du poids d'une volaille,
- la reconnaissance (1003) du sexe d'une volaille se trouvant sur le plateau de pesée (100),
- la mise en mémoire d'informations de poids et/ou d'informations de sexe, et/ou la formation et de préférence la mise en mémoire (1006) de moyennes spécifiques au sexe d'une pluralité d'informations de poids et/ou d'informations de sexe,
- la comparaison (1004) d'informations de poids, de préférence y compris d'informations de sexe et/ou de moyennes spécifiques au sexe à au moins une courbe de pesée, dans lequel les informations de poids, en particulier les informations de poids spécifiques au sexe, qui diffèrent d'une valeur prédéfinie d'une courbe de pesée, sont mises en mémoire séparément et/ou ne sont pas prises en compte pour la formation de moyennes.

14. Procédé selon la revendication précédente, **caractérisée par** :
- le fait de pourvoir et de préférence la mise en mémoire des informations de poids et/ou informations de sexe et/ou moyennes spécifiques au sexe avec des données supplémentaires, de préférence comprenant des informations de temps et/ou informations de lieu et/ou informations d'environnement,
- la transmission (1007) d'informations de poids et/ou informations de sexe et/ou moyennes spécifiques au sexe et de préférence de données supplémentaires, et/ou
- la comparaison d'informations de poids et/ou d'informations de sexe et/ou de moyennes spécifiques au sexe à au moins deux courbes de pesée spécifiques au sexe.

15. Utilisation d'une balance pour volaille (1) selon au moins l'une des revendications précédentes 1-12 pour la pesée spécifique au sexe de volailles dans un élevage de volailles, en particulier dans un procédé (1000) selon la revendication précédente.
